# EUROPEAN PATENT SPECIFICATION

(11) **EP 1 970 225 B1**
(45) Date of publication and mention of the grant of the patent: **17.11.2010**
(21) Application number: 08075182.9
(22) Date of filing: 11.03.2008
(51) Int. Cl.: B60G 7/02, B60G 9/00, F16B 35/06, B62D 21/12

(54) **Strut arrangement for wheel axle suspension**
Strebenanordnung für eine Radachsenaufhängung
Agencement de renfort pour suspension d'essieu de roue

(30) Priority: 12.03.2007 NL 1033534
(43) Date of publication of application: 17.09.2008
(73) Proprietor: Weweler Nederland B.V., 7332 AP Apeldoorn (NL)
(72) Inventor: Bramer, Hans, 6961 WR Eerbeek (NL); Everts, Geert, 7722 LL Dalfsen (NL)
(74) Representative: Houben, Christiaan Hein Willem Frans

(56) References cited:
- EP-A- 0 995 664
- EP-A- 1 057 716
- EP-A- 1 481 824
- EP-A- 1 672 229
- DE-U1- 20 112 435
- FR-A- 2 855 569

## Description

The invention relates to the fixing of strut elements in a wheel axle suspension of a vehicle. A wheel axle suspension for suspending a wheel axle in a chassis of a vehicle comprises two bearing brackets, which are fixed on the chassis on either side of the vehicle. Furthermore, the suspension comprises two longitudinal bearing arms, which are each hingedly fixed on one of the bearing brackets by means of a hinge bolt. The wheel axle is fixed on the bearing arms by means of an axle restraint. The wheel axle suspension furthermore comprises two strut elements for absorbing transverse forces. The strut elements extend obliquely upwards from the bearing bracket and are each connected by the one, higher-lying end to the chassis. The strut elements are connected by the other, lower-lying end by means of a threaded bolt to the flange of one of the hinge bolts. For this purpose, the hinge bolt is provided with a flange having one or more holes through which a threaded bolt can be run in order to fix the strut element to the hinge bolt.

Such a wheel axle suspension is disclosed in EP 1 057 716 A1. In the case of the known wheel axle suspension, strut elements subjected to tensile stress are fixed on a flange on the bolt head. In the case of the known bolt head the flange lies in line with the central axis of the shank of the hinge bolt. This means that during the absorption of transverse forces moments can be transmitted into the construction.

The object of the invention is to provide an improved wheel axle suspension construction.

This object is achieved according to a first aspect of the invention by a hinge bolt according to claim 1. In the case of the hinge bolt according to the invention, the flange on the bolt head extends parallel to and at a distance from the central axis of the bolt shank in such a way that the neutral axis of the strut element intersects the central axis of the bolt. The hinge bolt according to the invention provides the possibility for a wheel axle suspension construction in which the transverse forces transmitted by the bearing arm by way of the hinge bolt to the bearing bracket are absorbed directly by the strut elements at the point where said forces are acting, so that no moments can arise in the construction. This has the advantage that a lighter construction will suffice.

In a preferred embodiment, the flange is provided with one fixing hole for running through a threaded bolt for fixing the strut element on the flange. This makes it possible for the strut element to be fitted at a freely chosen angle relative to the central axis of the hinge bolt. This is advantageous because the hinge bolt can be used in wheel axle suspensions for vehicles of different track widths, chassis heights and spring carrier arm heights.

The bolt head is preferably provided with a flat side for ensuring that the bolt can be secured during tightening of the connection between the hinge bolt and the nut to be screwed onto it.

In a preferred embodiment of the hinge bolt according to the invention, a recess is provided in the flange at the position of the bolted connection between the flange and the strut element, which recess can accommodate a boss on the strut element. In the fitted state, the flange and the strut element are clamped against each other by means of a threaded bolt and a nut. Owing to the fact that the boss on the strut element falls into the recess in the flange, the connection between the strut element and the flange is at least partially interlocking, with the result that the shear load on the threaded bolt is considerably reduced. This means that a smaller threaded bolt will suffice. As an alternative, a boss can be provided on the flange at the position of the bolted connection between the flange and the strut element, which boss can be accommodated in a recess in the strut element.

As an alternative to the hinge bolt with a flange described above for fixing a strut element, a nut with a flange can be provided, which nut is designed so that it can be fitted on a hinge bolt. This aspect of the invention is described in claim 6. Preferred embodiments of the nut are described in subclaims 7-10 and provide the same advantages as the equivalent preferred embodiments of the hinge bolt according to the invention described above.

The invention furthermore relates to a wheel axle suspension according to claim 11, in which a hinge bolt or a nut according to the invention is used.

In a particular preferred embodiment of the wheel axle suspension according to the invention, a recess is provided in the flange at the position of the bolted connection between the flange and the strut element, the strut element being provided with a boss which falls into the recess in the flange, the strut element furthermore being provided with a recess situated on the side opposite the boss, and a ring being fitted, which ring is accommodated in at least the recess in the strut element, and through which ring the threaded bolt is run. The ring preferably has bevelled outer edges, the shape of the ring and the shape of the recess in the strut element being substantially complementary. The use of the ring ensures that the shear load on the bolt is further reduced, with the result that heavier loads can be absorbed. Furthermore, use of the ring means that a longer bolt is needed, which is advantageous for achieving a sufficiently high initial tension.

Yet another aspect of the invention is described in claim 15.

The invention will be explained in greater detail on the basis of the description below with reference to the drawing, in which:
Fig. 1 shows a side view of a wheel axle suspension;
Fig. 2a shows a diagrammatic cross section of the chassis at the position of the wheel axle suspension;
Fig. 2b shows a diagrammatic cross section of another chassis at the position of the wheel axle suspension;
Fig. 3 shows a side view of a preferred embodiment of a hinge bolt according to the invention with a strut element connected to it;
Fig. 4a shows a view in section of the hinge bolt with the strut element of Fig. 3 connected to it;
Fig. 4b shows a view in section of the hinge bolt with two strut elements according to another aspect of the invention connected to it;
Fig. 5 shows a side view of another preferred embodiment of a hinge bolt according to the invention with a strut element connected to it;
Fig. 6 shows a top view of the hinge bolt with the strut element of Fig. 5 connected to it;
Fig. 7 shows a side view of a preferred embodiment of a nut according to the invention with a strut element connected to it;
Fig. 8 shows a view in section of the nut with the strut element of Fig. 7 connected to it; and
Fig. 9 shows a view in section of an alternative embodiment of a hinge bolt according to the invention with a strut element connected to it.

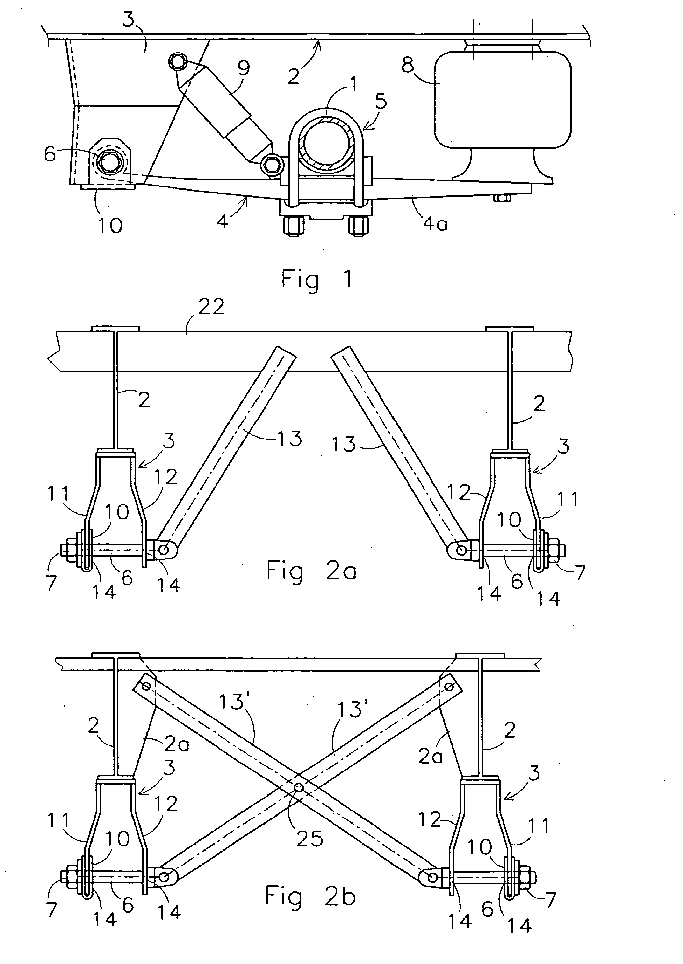

Fig. 1 shows diagrammatically a wheel axle suspension of an axle assembly of a vehicle. The wheel axle is indicated by reference numeral 1. The wheel axle 1, on which one or more wheels are fixed on both ends, is shown as a hollow, round axle. The wheel axle 1 can, however, also be square or have a different cross section. The vehicle is usually provided with a wheel axle suspension on both sides.

The wheel axle suspension comprises a bearing bracket 3 which is fixed on a chassis beam 2 of the vehicle, and a bearing arm 4 for the wheel axle 1, which bearing arm is hingedly fixed on the bearing bracket 3 and extends in the longitudinal direction of the vehicle. The embodiment of the bearing arm 4 shown is a resilient arm which is formed by rolling. The wheel axle is immovably fixed on the bearing arm 4 in a known manner by means of a U-shaped bolt 5. In the embodiment shown, the bearing arm 4 extends with an end part 4a beyond the wheel axle 1. A gas spring 8 is fitted between said end part 4a and the chassis 2. A shock absorber 9 is furthermore fitted between the bearing arm 4 and the bearing bracket 3.

The bearing bracket 3 comprises two side plates 11 and 12. The bearing bracket 3 is welded - or at least its side plates are welded - to the chassis beam 2 at the top edge, and are fixed by a bolted connection or connected in another way to the chassis beam 2.

The side plates 11 and 12 are provided with holes 14 for fixing the bearing arm 4 and holes for fixing the shock absorber 9. The holes 14 are slot-shaped with the longitudinal central axis parallel to the longitudinal direction of the vehicle. The side plates 11 and 12 in the embodiment shown are not flat, but it is conceivable to have flat side plates. The bearing bracket 3 is narrower on the upper side to be fixed on the chassis 2 than it is on the underside (see Fig. 2).

The bearing arm 4 is fixed on the bearing bracket 3 by means of a hinge bolt 6, which is run through the slot-shaped holes 14 provided for it in the side plates of the bearing bracket 3. The bearing arm 4 is furthermore fixed on the bearing bracket 3 by means of a special adjusting element 10, by means of which the position of the hinge bolt 6 of the bearing arm 4 can be adjusted in the slotted holes 14 relative to the bearing bracket 3, and thus in the longitudinal direction of the vehicle. Such an adjusting element 10 is also sometimes known as a wearing plate, and can be in the form of a plate which rests against the inside of the side plate 11, 12 of the bearing bracket 3, but can also be a U-shaped bracket which grips round the side plate 11,12 of the bearing bracket 3.

Fig. 2a shows a cross section of the chassis at the position of the axle suspension. The chassis beams 2 are connected on the upper side to a crossbar 22. A strut bar 13 extends obliquely downwards and outwards from the crossbar 22 on each of the sides towards the bearing bracket 3. The strut bar 13 can have, for example, a U-shaped profile. The strut bar 13 can be connected to the crossbar 22 by means of, for example, a riveted connection, a bolted connection, a welded connection, or in another way.

The bottom end of the strut bar 13 is fixed on a flange, which is fixed on the head of the hinge bolt 6.

Fig. 2b shows an alternative chassis construction in which no crossbar to which the strut bars can be fixed is present between the chassis beams 2. In the alternative construction, the strut bars 13' cross each other and are connected to each other at that point by a pin 25. The top end of the strut bar 13' is in each case connected to a plate 2a provided on the chassis beam 2.

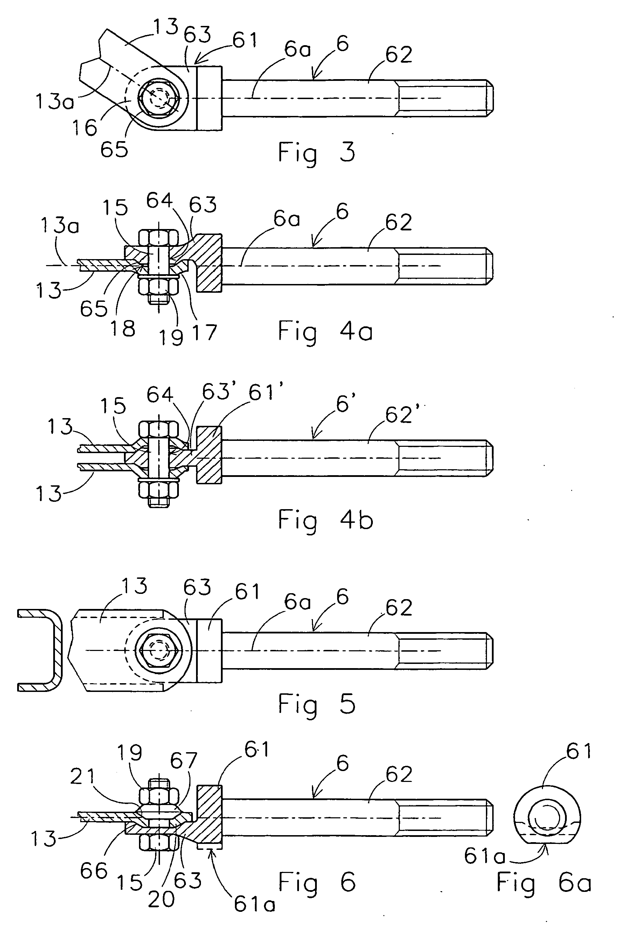

The hinge bolt 6 is shown in greater detail in Figs 3 and 4a. The hinge bolt 6 has a head 61 and a shank 62. A flange 63 is moulded onto the head 61, in which flange a fixing hole 64 for running through a threaded bolt 15 is provided. The flange 63 extends substantially parallel to the central axis 6a of the hinge bolt 6. The flange 63 is situated at a distance from the central axis 6a of the bolt shank 62, so that the neutral axis 13a of the strut element 13 resting against the flange 63 intersects the central axis 6a of the hinge bolt 6. This prevents the strut element 13 from exerting a moment of force upon the bolt head 61, which could have a tightening or loosening effect on the bolt 6.

On the side of the flange 63 facing the strut bar 13, a boss 65 is provided around the hole 64. The boss 65 in the case shown is a truncated cone shape, but it could also be another shape, for example a segment of a sphere. In one end region 16 on the side facing the flange 63, the strut bar 13 is provided with a recess 17, having a conical wall 18 in the case shown. In the fitted state, the boss 65 on the flange 63 falls into the recess 17 in the end region of the strut bar 13. In the fitted state, the flange 63 and the end region 16 of the strut bar 13 are clamped against each other by means of the threaded bolt 15 and a corresponding nut 19. Owing to the fact that the boss 65 on the flange falls into the recess in the end region 16 of the strut bar, the connection between the strut bar 13 and the flange 63 is at least partially interlocking, with the result that the shear load on the threaded bolt 15 is considerably reduced. This means that a smaller threaded bolt 15 will suffice.

Fig. 4b shows an alternative bolt 6' for fixing a double strut arrangement. A flange 63' is moulded onto the head 61', in which flange a fixing hole 64 for running through a threaded bolt 15 is provided. The flange 63' extends substantially parallel to and in line with the central axis of the hinge bolt 6'. The flange 63' lies in line with the central axis of the bolt shank 62'. Owing to the fact that the strut bars 13 engage on both sides of the flange 63', no moment of force occurs on the bolt head 61', which moment has the tendency to loosen or tighten the bolt 6'.

The head 61 of the hinge bolt has a flattened side 61 a, as can best be seen in Fig. 6A. This means that the hinge bolt 6 can be secured during tightening of the connection between the hinge bolt 6 and the corresponding nut 7.

Figs 5 and 6 show an alternative, in which the hinge bolt 6 has a flange 63 which has a recess 66 in a region around the fixing hole 64. On the end region 16 of the strut bar 13, a boss 20 is provided on one side around the fixing hole provided for the insertion of the threaded bolt 15, and a recess 21 is provided on the other side. The boss 20 can be accommodated in the recess 66 in the flange 63. It can be seen in Fig. 6 that a ring 67 is fitted, which ring is accommodated in the recess 21 in the end region of the strut bar 13. The threaded bolt 15 also extends through this ring 67, and in the fitted state the corresponding nut 19 rests against the ring 67. In the embodiment shown, the ring 67 has bevelled outer edges, the shape of the ring 67 and the shape of the recess 66 in the end region 16 of the strut bar 13 being substantially complementary. Through the use of the ring 67, the shear load on the bolt 15 is further reduced, with the result that heavier loads can be absorbed.

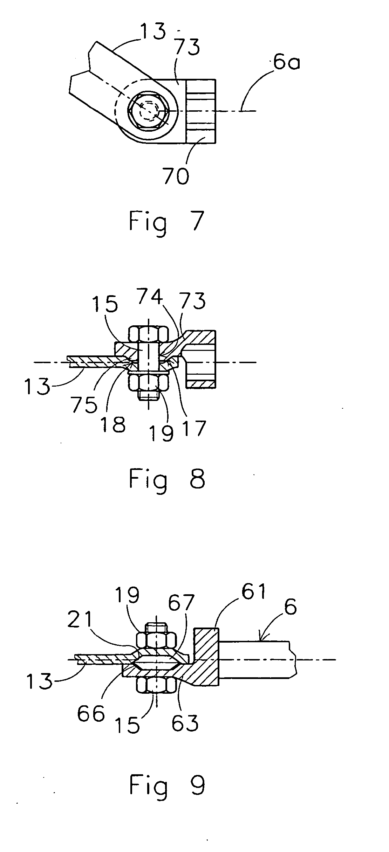

In another embodiment, which is illustrated in Fig. 9, the recess 21 in the end part 16 of the strut bar 13 is facing the recess 66 in the flange 63. A ring 67 is accommodated in the hollow formed between them, which ring corresponds to the ring 67 described with reference to Figs 5 and 6. In the case of this connection construction between the hinge bolt 6 and the strut bar 13 also, a partial interlocking is achieved through use of the ring 67, and the shear load on the bolt 15 is reduced, with the result that heavier loads can be absorbed.

Fig. 7 and Fig. 8 show another aspect of the invention, in which it is not the hinge bolt 6, but the corresponding nut 70 which is provided with a flange 73, in which a fixing hole 74 for running through a threaded bolt 15 is provided. The nut 70 is then fitted on the innermost side plate 12 of the bearing bracket 3. The flange 73 extends substantially parallel to the central axis 6a of the nut, and thus the corresponding hinge bolt. The flange 73 lies at a distance from the central axis 6a, so that the neutral axis 13a of the strut element 13 resting against the flange 73 intersects the central axis 6a of the nut.

On the side of the flange 73 facing the strut bar 13, a boss 75 is provided round the hole 74. The boss 75 in the case shown is a truncated cone shape, but it could also be another shape, for example a segment of a sphere. In one end region 16 on the side facing the flange 73, the strut bar 13 is provided with a recess 17, having a conical wall 18 in the case shown. In the fitted state, the boss 75 on the flange 73 falls into the recess 17 in the end region of the strut bar 13. In the fitted state, the flange 73 and the end region 16 of the strut bar 13 are clamped against each other by means of the threaded bolt 15 and a corresponding nut 19. Owing to the fact that the boss 75 on the flange 73 falls into the recess in the end region 16 of the strut bar, the connection between the strut bar 13 and the flange 73 is at least partially interlocking, with the result that the shear load on the threaded bolt 15 is considerably reduced. This means that a smaller threaded bolt 15 will suffice.

## Claims

1. Hinge bolt (6) for hingedly suspending a longitudinal bearing arm (4) of a wheel axle suspension in a suspension bracket (3), which hinge bolt (6) comprises a bolt head (61) and a bolt shank (62), a flange being (63) provided on the bolt head (61), to which flange (63) a strut element (13, 13') can be fixed by means of a bolt (15) or the like, **characterized in that** the flange (63) extends staggered and parallel with respect to the central axis (6a) of the bolt shank (62) in such a way that the neutral axis (13a) of the strut element (13, 13') intersects, or substantially intersects, the central axis (6a) of the bolt (6).

2. Hinge bolt according to claim 1, in which the flange (63) is provided with one fixing hole (64) for running through a threaded bolt (15) for fixing the strut element (13) on the flange (63).

3. Hinge bolt according to claim 1 or 2, in which a recess (66) is provided in the flange (63) at the position of the bolted connection between the flange (63) and the strut element (13), which recess (66) can accommodate a boss (20) on the strut element (13).

4. Hinge bolt according to claim 1 or 2, in which a boss (65) is provided on the flange (63) at the position of the bolted connection between the flange (63) and the strut element (13), which boss (65) can be accommodated in a recess (17) in the strut element (13).

5. Hinge bolt according to one of the preceding claims, in which the bolt head (61) is provided with a flat side (61a) for ensuring that the bolt (6) can be secured during tightening of the connection between the hinge bolt (6) and the nut (7) to be screwed onto it.

6. Nut (70) designed to be fitted on a hinge bolt for hingedly suspending a longitudinal bearing arm of a wheel axle suspension in a suspension bracket, which hinge bolt comprises a bolt head and a bolt shank, a flange (73) being provided on the nut (70), to which flange (73) a strut element (13) can be fixed by means of a threaded bolt or the like, **characterized in that** the flange (73) extends staggered and parallel with respect to the central axis (6a) of the bolt shank in such a way that in the fitted state the neutral axis of the strut element intersects the central axis (6a) of the bolt.

7. Nut according to claim 6, in which the flange (73) is provided with one fixing hole (74) for running through a fixing bolt (15) for fixing the strut element (13) on the flange (73).

8. Nut according to claim 6 or 7, in which a recess is provided in the flange at the position of the bolted connection between the flange and the strut element, which recess can accommodate a boss on the strut element.

9. Nut according to claim 6 or 7, in which a boss (75) is provided on the flange (73) at the position of the bolted connection between the flange (73) and the strut element (13), which boss (75) can be accommodated in a recess (17) in the strut element (13).

10. Nut according to one of claims 6-9, in which the nut is provided with a flat side for ensuring that the bolt can be secured during tightening of the connection between the hinge bolt and the nut.

11. Wheel axle suspension for suspending a wheel axle (1) on a chassis (2) of a vehicle, comprising two bearing brackets (3), which are fixed on the chassis (2) on either side of the vehicle, two longitudinal bearing arms (4), which are each hingedly fixed on one of the bearing brackets (3) by means of a hinge bolt (6) and to which the wheel axle (1) is fixed, and also two strut elements (13, 13') which are each connected by one end to the chassis (2) and are each connected by the other end by means of a threaded bolt (15) to the flange (63) of one of the hinge bolts (6) designed according to one of claims 1-5, or are connected to the flange (73) of one of the nuts (70) screwed onto the hinge bolts according to one of claims 6-10.

12. Wheel axle suspension according to claim 11, in which a recess (17) is provided in the flange (63, 73) at the position of the bolted connection between the flange (63, 73) and the strut element (13, 13'), and in which the strut element (13, 13') is provided with a boss (20) which falls into the recess (17) in the flange (63, 73).

13. Wheel axle suspension according to claim 12, in which the strut element (13) furthermore is provided with a recess (21) situated on the side opposite the boss, and a ring (67) being fitted, which ring (67) is accommodated at least in the recess (17) in the strut element (13), and through which the threaded bolt (15) is run.

14. Wheel axle suspension according to claim 13, in which the ring (67) has bevelled outer edges, the shape of the ring (67) and the shape of the recess (21) in the strut element (13) being substantially complementary.

15. Wheel axle suspension for suspending a wheel axle (1) on a chassis (2) of a vehicle, comprising two bearing brackets (3), which are fixed on the chassis (2) on either side of the vehicle, two longitudinal bearing arms (4), which are each hingedly fixed on one of the bearing brackets (3) by means of a hinge bolt (6'), and to which the wheel axle (1) is fixed, and also strut elements (13) which are each connected by one end to the chassis (2) and are each connected by the other end by means of a threaded bolt (15) to the flange (63') of one of the hinge bolts (6'), which hinge bolts (6') comprise a bolt head (61') and a bolt shank (62'), a flange (63') extending in line with the central axis of the bolt shank (62') being fitted on the bolt head (61'), to which flange (63') a strut element (13) can be fixed by means of a bolt (6') or the like, and in which a strut element (13) in each case engages on either side of the flange (63').

## Patentansprüche

1. Gelenkbolzen (6), um einen länglichen Lagerarm (4) einer Radachsenaufhängung in einer Aufhängungshalterung (3) gelenkig aufzuhängen, wobei der Gelenkbolzen (6) einen Bolzenkopf (61) und einen Bolzenschaft (62) umfasst, wobei ein Flansch (63) auf dem Bolzenkopf (61) vorhanden ist, wobei an dem Flansch (63) ein Verstrebungselement (13, 13') mittels eines Bolzens (15) oder ähnlichem befestigt werden kann, **dadurch gekennzeichnet, dass** sich der Flansch (63) versetzt und parallel zu der Mittelachse (6a) des Bolzenschafts (62) in solch einer Weise erstreckt, dass die neutrale Achse (13a) des Verstrebungselements (13, 13') die Mittelachse (6a) des Bolzens (6) schneidet oder im Wesentlichen schneidet.

2. Gelenkbolzen nach Anspruch 1, **dadurch gekennzeichnet, dass** der Flansch (63) mit einem Befestigungsloch (64) versehen ist, durch welches ein Gewindebolzen (15) verläuft, um das Verstrebungselement (13) an dem Flansch (63) zu befestigen.

3. Gelenkbolzen nach Anspruch 1 oder 2, **dadurch gekennzeichnet, dass** eine Vertiefung (66) in dem Flansch (63) an der Position der Bolzenverbindung zwischen dem Flansch (63) und dem Verstrebungselement (13) vorhanden ist, wobei die Vertiefung (66) einen Vorsprung (20) auf dem Verstrebungselement (13) aufnehmen kann.

4. Gelenkbolzen nach Anspruch 1 oder 2, **dadurch gekennzeichnet, dass** ein Vorsprung (65) auf dem Flansch (63) an der Position der Bolzenverbindung zwischen dem Flansch (63) und dem Verstrebungselement (13) vorhanden ist, wobei der Vorsprung (65) in eine Vertiefung (17) in dem Verstrebungselement (13) aufgenommen werden kann.

5. Gelenkbolzen nach einem der vorhergehenden Ansprüche, **dadurch gekennzeichnet, dass** der Bolzenkopf (61) mit einer flachen Seite (61 a) versehen ist, um sicherzustellen, dass der Bolzen (6) während einer Herstellung der Verbindung zwischen dem Gelenkbolzen (6) und der Mutter (7), welche darauf zu schrauben ist, befestigt werden kann.

6. Mutter (70), welche derart ausgestaltet ist, dass sie auf einen Gelenkbolzen anbringbar ist, um einen länglichen Lagerarm (4) einer Radachsenaufhängung in einer Aufhängungshalterung gelenkig aufzuhängen, wobei der Gelenkbolzen einen Bolzenkopf und einen Bolzenschaft umfasst, wobei ein Flansch (73) auf der Mutter (70) vorhanden ist, wobei an dem Flansch (73) ein Verstrebungselement (13) mittels eines Gewindebolzens oder ähnlichem befestigt werden kann, **dadurch gekennzeichnet, dass** sich der Flansch (73) versetzt und parallel zu der Mittelachse (6a) des Bolzenschafts in solch einer Weise erstreckt, dass in dem angebrachten Zustand die neutrale Achse des Verstrebungselements die Mittelachse (6a) des Bolzens schneidet.

7. Mutter nach Anspruch 6, **dadurch gekennzeichnet, dass** der Flansch (63) mit einem Befestigungsloch (74) versehen ist, durch welches ein Befestigungsbolzen (15) verläuft, um das Verstrebungselement (13) an dem Flansch (73) zu befestigen.

8. Mutter nach Anspruch 6 oder 7, **dadurch gekennzeichnet, dass** eine Vertiefung in dem Flansch an der Position der Bolzenverbindung zwischen dem Flansch und dem Verstrebungselement vorhanden ist, wobei die Vertiefung einen Vorsprung auf dem Verstrebungselement aufnehmen kann.

9. Mutter nach Anspruch 6 oder 7, **dadurch gekennzeichnet, dass** ein Vorsprung (75) auf dem Flansch (73) an der Position der Bolzenverbindung zwischen dem Flansch (73) und dem Verstrebungselement (13) vorhanden ist, wobei der Vorsprung (75) in eine Vertiefung (17) in dem Verstrebungselement (13) aufgenommen werden kann.

10. Mutter nach einem der Ansprüche 6-9, **dadurch gekennzeichnet, dass** die Mutter mit einer flachen Seite versehen ist, um sicherzustellen, dass der Bolzen während einer Herstellung der Verbindung zwischen dem Gelenkbolzen und der Mutter befestigt werden kann.

11. Radachsenaufhängung zum Aufhängen einer Radachse (1) an einem Fahrgestell (2) eines Fahrzeugs, umfassend zwei Lagerhalterungen (3), welche an dem Fahrgestell (2) an einer jeweiligen Seite des Fahrzeugs befestigt sind, zwei längliche Lagerarme (4), welche jeweils an einer der Lagerhalterungen (3) mit einem Gelenkbolzen (6) gelenkig befestigt sind und an welchen die Radachse (1) befestigt ist, und auch zwei Verstrebungselemente (13, 13'), welche jeweils mit einem Ende mit dem Fahrgestell (2) verbunden sind und jeweils mit dem anderen Ende mittels eines Gewindebolzens (15) mit dem Flansch (63) eines der Gewindebolzens (6), welche gemäß einem der Ansprüche 1-5 ausgestaltet sind, verbunden sind, oder mit dem Flansch (73) eines der Muttern (70), welche auf die Gewindebolzen geschraubt sind, gemäß einem der Ansprüche 6-10 verbunden sind.

12. Radachsenaufhängung nach Anspruch 11, **dadurch gekennzeichnet, dass** eine Vertiefung in dem Flansch (63, 73) an der Position der Bolzenverbindung zwischen dem Flansch (63, 73) und dem Verstrebungselement (13, 13') vorhanden ist, und dass das Verstrebungselement (13, 13') mit einem Vorsprung (20) versehen ist, welcher in die Vertiefung (17) in dem Flansch (63, 73) aufgenommen wird.

13. Radachsenaufhängung nach Anspruch 12, **dadurch gekennzeichnet, dass** das Verstrebungselement (13) darüber hinaus mit einer Vertiefung (17) versehen ist, welche auf der Seite gegenüber dem Vorsprung angeordnet ist, und dass ein Ring (67) angepasst ist, wobei der Ring (67) zumindest in die Vertiefung (17) in dem Verstrebungselement (13) aufgenommen ist und wobei durch diesen der Gewindebolzen (15) verläuft.

14. Radachsenaufhängung nach Anspruch 13, **dadurch gekennzeichnet, dass** der Ring (67) abgeschrägte äußere Kanten aufweist, wobei die Form des Rings (67) und die Form der Vertiefung (21) in dem Verstrebungselement (13) im Wesentlichen komplementär zueinander sind.

15. Radachsenaufhängung zum Aufhängen einer Radachse (1) an einem Fahrgestell (2) eines Fahrzeugs, umfassend zwei Lagerhalterungen (3), welche an dem Fahrgestell (2) an einer jeweiligen Seite des Fahrzeugs befestigt sind, zwei längliche Lagerarme (4), welche jeweils an einer der Lagerhalterungen (3) mit einem Gelenkbolzen (6') gelenkig befestigt sind und an welchen die Radachse (1) befestigt ist, und auch Verstrebungselemente (13), welche jeweils mit einem Ende mit dem Fahrgestell (2) verbunden sind und jeweils mit dem anderen Ende mittels eines Gewindebolzens (15) mit dem Flansch (63') eines der Gewindebolzen (6') verbunden sind, wobei die Gewindebolzen (6') einen Bolzenkopf (61') und einen Bolzenschaft (62'), einen Flansch (63'), welcher sich ausgerichtet mit der Mittelachse des Bolzenschafts (62'), der an dem Bolzenkopf (61') angebracht ist, erstreckt, umfassen, wobei an dem Flansch (63') ein Verstrebungselement (13) mittels eines Bolzens (6') oder ähnlichem befestigt werden kann und wobei sich in jedem Fall ein Verstrebungselement (13) an einer jeweiligen Seite des Flansches (63') in Eingriff befindet.

## Revendications

1. Boulon d'articulation (6) pour suspendre de manière articulée un bras de palier longitudinal (4) d'une suspension d'essieu de roue dans une console de suspension (3), lequel boulon d'articulation (6) comprend une tête de boulon (61) et une tige de boulon (62), un rebord (63) étant prévu sur la tête de boulon (61), auquel rebord (63), on peut fixer un élément d'entretoise (13, 13') au moyen d'un boulon (15) ou similaire, **caractérisé en ce que** le rebord (63) s'étend en quinconce et en parallèle par rapport à l'axe central (6a) de la tige de boulon (62) de sorte que l'axe neutre (13a) de l'élément d'entretoise (13, 13') coupe ou coupe sensiblement l'axe central (6a) du boulon (6).

2. Boulon d'articulation selon la revendication 1, dans lequel le rebord (63) est prévu avec un trou de fixation (64) pour s'étendre à travers un boulon fileté (15) pour fixer l'élément d'entretoise (13) sur le rebord (63).

3. Boulon d'articulation selon la revendication 1 ou 2, dans lequel un évidement (66) est prévu dans le rebord (63) dans la position du raccordement boulonné entre le rebord (63) et l'élément d'entretoise (13), lequel évidement (66) peut loger un bossage (20) sur l'élément d'entretoise (13).

4. Boulon d'articulation selon la revendication 1 ou 2, dans lequel un bossage (65) est prévu sur le rebord (63) dans la position du raccordement boulonné entre le rebord (63) et l'élément d'entretoise (13), lequel bossage (65) peut être logé dans un évidement (17) dans l'élément d'entretoise (13).

5. Boulon d'articulation selon l'une quelconque des revendications précédentes, dans lequel la tête de boulon (61) est prévue avec un côté plat (61a) pour garantir que le boulon (6) peut être fixé pendant le serrage du raccordement entre le boulon d'articulation (6) et l'écrou (7) à visser sur ce dernier.

6. Ecrou (70) conçu pour être installé sur un boulon d'articulation pour suspendre de manière articulée un bras de palier longitudinal d'une suspension d'essieu de roue dans une console de suspension, lequel boulon d'articulation comprend une tête de boulon et une tige de boulon, un rebord (73) étant prévu sur l'écrou (70), sur lequel rebord (73), on peut fixer un élément d'entretoise (13) au moyen d'un boulon fileté ou similaire, **caractérisé en ce que** le rebord (73) s'étend en quinconce et en parallèle par rapport à l'axe central (6a) de la tige de boulon de sorte qu'à l'état ajusté, l'axe neutre de l'élément d'entretoise coupe l'axe central (6a) du boulon.

7. Ecrou selon la revendication 6, dans lequel le rebord (73) est prévu avec un trou de fixation (74) pour s'étendre à travers un boulon de fixation (15) pour fixer l'élément d'entretoise (13) sur le rebord (73).

8. Ecrou selon la revendication 6 ou 7, dans lequel un évidement est prévu dans le rebord dans la position du raccordement boulonné entre le rebord et l'élément d'entretoise, lequel évidement peut loger un bossage sur l'élément d'entretoise.

9. Ecrou selon la revendication 6 ou 7, dans lequel un bossage (75) est prévu sur le rebord (73) dans la position du raccordement boulonné entre le rebord (73) et l'élément d'entretoise (13), lequel bossage (75) peut être logé dans un évidement (17) dans l'élément d'entretoise (13).

10. Ecrou selon l'une quelconque des revendications 6 à 9, dans lequel l'écrou est prévu avec un côté plat pour garantir que le boulon peut être fixé pendant le serrage du raccordement entre le boulon d'articulation et l'écrou.

11. Suspension d'essieu de roue pour suspendre un essieu de roue (1) sur un châssis (2) d'un véhicule, comprenant deux consoles de palier (3) qui sont fixées sur le châssis (2) de chaque côté du véhicule, deux bras de palier longitudinaux (4) qui sont chacun fixés de manière articulée sur l'une des consoles de palier (3) au moyen d'un boulon d'articulation (6) et sur laquelle l'essieu de roue (1) est fixé, et également deux éléments d'entretoise (13, 13') qui sont chacun raccordés par une extrémité au châssis (2) et sont chacun raccordés par l'autre extrémité au moyen d'un boulon fileté (15) au rebord (63) de l'un des boulons d'articulation (6) conçus selon l'une quelconque des revendications 1 à 5 ou sont raccordés au rebord (73) de l'un des écrous (70) vissés sur les boulons d'articulation selon l'une quelconque des revendications 6 à 10.

12. Suspension d'essieu de roue selon la revendication 11, dans laquelle un évidement (17) est prévu dans le rebord (63, 73) dans la position du raccordement boulonné entre le rebord (63, 73) et l'élément d'entretoise (13, 13') et dans laquelle l'élément d'entretoise (13, 13') est prévu avec un bossage (20) qui tombe dans l'évidement (17) dans le rebord (63, 73).

13. Suspension d'essieu de roue selon la revendication 12, dans laquelle l'élément d'entretoise (13) est en outre prévu avec un évidement (21) situé sur le côté opposé au bossage et un anneau (67) qui est ajusté, lequel anneau (67) est logé au moins dans l'évidement (17) dans l'élément d'entretoise (13) et à travers lequel le boulon fileté (15) s'étend.

14. Suspension d'essieu de roue selon la revendication 13, dans laquelle l'anneau (67) a des bords externes biseautés, la forme de l'anneau (67) et la forme de l'évidement (21) dans l'élément d'entretoise (13) étant sensiblement complémentaires.

15. Suspension d'essieu de roue pour suspendre un essieu de roue (1) sur un châssis (2) d'un véhicule, comprenant deux consoles de palier (3) qui sont fixées sur le châssis (2) de chaque côté du véhicule, deux bras de palier longitudinaux (4), qui sont chacun fixés de manière articulée sur l'une des consoles de palier (3) au moyen d'un boulon d'articulation (6') et sur laquelle l'essieu de roue (1) est fixé et également des éléments d'entretoise (13) qui sont chacun raccordés par une extrémité au châssis (2) et sont chacun raccordés par l'autre extrémité au moyen d'un boulon fileté (15) au rebord (63') de l'un des boulons d'articulation (6'), lesquels boulons d'articulation (6') comprennent une tête de boulon (61') et une tige de boulon (62'), un rebord (63') s'étendant de manière alignée avec l'axe central de la tige de boulon (62') qui est monté sur la tête de boulon (61'), auquel rebord (63'), on peut fixer un élément d'entretoise (13) au moyen d'un boulon (6') ou similaire, et dans laquelle un élément d'entretoise (13) dans chaque cas se met en prise de chaque côté du rebord (63').
